(19) Europäisches Patentamt / European Patent Office / Office européen des brevets

(11) **EP 1 475 609 B1**

(12) **EUROPÄISCHE PATENTSCHRIFT**

(45) Veröffentlichungstag und Bekanntmachung des Hinweises auf die Patenterteilung:
**24.10.2012 Patentblatt 2012/43**

(51) Int Cl.:
*G01C 21/16* (2006.01)     *A01B 69/00* (2006.01)
*G05D 1/02* (2006.01)     *G01C 21/00* (2006.01)
*A01B 79/00* (2006.01)

(21) Anmeldenummer: **04101658.5**

(22) Anmeldetag: **21.04.2004**

(54) **Bezugssystemkompensationssystem eines Landfahrzeugs**

GPS / INS compensation system of a land vehicle

Système de compensation d'un système de référence d'un véhicule terrestre

(84) Benannte Vertragsstaaten:
**DE ES FR GB**

(30) Priorität: **09.05.2003 US 435068**
**09.05.2003 US 435067**

(43) Veröffentlichungstag der Anmeldung:
**10.11.2004 Patentblatt 2004/46**

(73) Patentinhaber: **DEERE & COMPANY**
**Moline, Illinois 61265-8098 (US)**

(72) Erfinder:
• **Rekow, Andrew Karl Wilhelm**
**50701, Waterloo (US)**
• **Nelson, Frederick William**
**50263, Waukee (US)**
• **Mercer, David Scott**
**50021, Ankeny (US)**
• **Pickett, Terence Daniel**
**50263, Waukee (US)**
• **Jones, Jennifer Louise**
**50322, Urbandale (US)**

(74) Vertreter: **Holst, Sönke et al**
**Deere & Company**
**European Office**
**Global Intellectual Property Services**
**John-Deere-Strasse 70**
**68163 Mannheim (DE)**

(56) Entgegenhaltungen:
**EP-A- 0 567 268     EP-A- 1 164 356**
**US-A- 5 416 712     US-A- 5 928 309**

EP 1 475 609 B1

**Beschreibung**

Die Erfindung betrifft ein Navigationssystem nach dem Oberbegriff des Anspruchs 1 und ein Verfahren nach dem Oberbegriff des Anspruchs 8.

Ein Nachteil von auf dem Global Positioning System (im Folgenden: GPS) basierenden Navigationssystemen, die in landwirtschaftlichen Fahrzeugen verwendet werden, besteht darin, dass der GPS-Empfänger derartiger Systeme nur die Position der GPS-Antenne feststellen kann. Bei den meisten Landfahrzeugen ist der Anbringungsort der Antenne durch das Erfordernis eingeschränkt, dass der Antenne ein freier Blick zum Himmel, und somit zu den Satelliten des GPS ermöglicht ist. Diese Position ist leider in der Regel nicht der gewünschte Referenzpunkt (z. B. die Kupplung eines Traktors, die Achse eines Landfahrzeugs, ein Punkt auf dem Boden unterhalb der Kupplung eines Traktors oder dergleichen). Deshalb kann die mittels des GPS bestimmte Position und Fahrtrichtung des Landfahrzeugs unrichtig sein, wenn unebenes Gelände überquert wird (wie Gelände mit Neigung, Hügeln, Tälern und dgl.), was mehrfach befahrene Spuren oder Richtungsfehler zur Folge haben kann.

Um die Position des gewünschten Referenzpunkts zu berechnen, ist eine genaue Messung der räumlichen Orientierung (Ausrichtung) des Landfahrzeugs in Bezug auf das Koordinatensystem, in dem navigiert wird, durchzuführen. Ein Ansatz für die Messung der Ausrichtung des Landfahrzeugs (s. EP 0 845 198 A) besteht darin, mehrere Antennen für das GPS an dem Fahrzeug in einer festen, bekannten Anordnung zu befestigen. Wenn präzise Messungen mit dem GPS durchgeführt werden, können die relativen Positionen der Antennen, wie sie in einem Abtastzyklus des Navigationssystems gemessen werden, zur Berechnung der Orientierung (Position, Ausrichtung und Fahrtrichtung) des gesamten Landfahrzeugs verwendet werden. Ein Navigationssystem, das diesem Ansatz folgt, würde mehrere GPS-Empfänger erfordern und wäre deshalb übermäßig kostenaufwändig.

Alternativ könnte ein Trägheitssystem in Kombination mit dem GPS verwendet werden (s. US 6 445 983 B). Bei diesem Ansatz bestimmt das Trägheitssystem die primäre Positions- und Richtungsinformation zum Führen oder Lenken des Landfahrzeugs. Die vom GPS bereitgestellte Information wird dann verwendet, um die Drift der vom Trägheitssystem bestimmten Positions- und Richtungsinformation zu berichten. Trägheitssysteme umfassen Gyroskope zur Messung des Schlinger-, Gier- und Neigungswinkels und können auch Beschleunigungsmesser zur Verbesserung der Genauigkeit der von den Gyroskopen gemessenen Information aufweisen.

Derartige Trägheitssysteme müssen relativ genau arbeiten und sind daher für viele Anwendungen wie die Systeme mit mehreren Antennen zu teuer.

Es wurde weiterhin vorgeschlagen (US 5 987 371 A, US 6 345 231 B), bei Landfahrzeugen die Position eines Referenzpunkts anhand der Position der GPS-Antenne und einer Umrechnungsmatrix zu bestimmen, in welche die seitliche Neigung des Fahrzeugs und/oder die Neigung des Fahrzeugs in Fahrtrichtung und die Orientierung des Fahrzeugs in der horizontalen Ebene um eine vertikale Drehachse (Gierwinkel) eingehen. Die drei genannten Größen werden durch geeignete Sensoren gemessen, beispielsweise einen Kompass für den Gierwinkel und Neigungsmesser für die Neigungen. Soll eine automatische Lenkung erfolgen, wird der Lenkwinkel anhand der Abweichungen des Referenzpunkts und der Ausrichtung des Fahrzeugs von einem Sollweg bestimmt. Hier wird nur die Positionsinformation der GPS-Antenne der weiteren Auswertung unterzogen, während die Richtungsinformation aus den Signalen der Sensoren abgeleitet wird.

Bei einem anderen Navigationssystem (US 6 236 916 B) wird die Position und Richtung eines Landfahrzeugs mittels der GPS-Antenne bestimmt. Der seitliche Neigungswinkel (Rollwinkel) wird durch einen Sensor erfasst und zur Korrektur der mittels der GPS-Antenne erfassten Position verwendet. Es ist auch ein separater Sensor für die Fahrtrichtung vorhanden, dessen Signale der selbsttätigen Lenkeinrichtung zugeführt werden, um ein stabiles Lenken zu ermöglichen. Hier wird die Positions- und Richtungsinformation von der GPS-Antenne durch den gemessenen Rollwinkel korrigiert. Die Richtungsbestimmung durch die GPS-Signale funktioniert nur dann, wenn das Fahrzeug sich bewegt.

Die US 5 928 309 A1 beschreibt ein Navigations- und Führungssystem für ein Landfahrzeug, das eine GPS-Antenne und mehrere lokale Sensoren in Form von Kreiselkompassen zur Erfassung der Fahrtrichtung, eines Dopplerradar zur Geschwindigkeitsmessung und eines Beschleunigungsmessers zur Erfassung der Seitenbeschleunigung des Fahrzeugs umfasst. Das Positionssignal wird primär durch das Dopplerradar und mittels der Kreiselkompasse erfassten Höhe und Fahrtrichtung erzeugt. Die GPS-Antenne stellt Positionssignale bereit, die anhand der lokal erfassten Richtungsinformation in absolute Positionen eines Referenzpunkts umgerechnet werden.

In der US 5 416 712 A wird ein Positionsbestimmungssystem beschrieben, bei dem die Richtungsdaten von einer GPS-Antenne und von einem Kreisel in einen Kalman-Filter eingegeben und miteinander gemischt werden, um die Genauigkeit der Richtungsdaten zu verbessern.

Die der Erfindung zu Grunde liegende Aufgabe wird darin gesehen, ein Navigationssystem bereitzustellen, bei dem durch ein Trägheitssystem eine Verbesserung der von einem Empfänger für ein globales Positionsbestimmungssystem bereitgestellten Navigationsinformation, wie Position, Richtung und Spurabstand ermöglicht wird, um Fehler zu vermeiden, die durch eine Änderung der Orientierung des Landfahrzeugs (d. h. Rollen und Gieren) auf unebenem Gelände bedingt werden, das jedoch nicht die volle Genauigkeit der Gyroskope und Beschleunigungsmesser konventioneller Trägheitssysteme erfordert.

Diese Aufgabe wird erfindungsgemäß durch die Lehre der Patentansprüche 1 und 8 gelöst, wobei in den weiteren Patentansprüchen Merkmale aufgeführt sind, die die Lösung in vorteilhafter Weise weiterentwickeln.

Ein Navigationssystem für ein Landfahrzeug, insbesondere ein landwirtschaftliches Landfahrzeug, wie einen Traktor, Mähdrescher, Sprüher, Baumwollpflücker oder dergleichen umfasst ein Bezugssystemkompensationssystem, das eine Kompensation der Information, die von einem globalen Positionsbestimmungssystem gewonnen wird, wie Position, Richtung, Spurabstand und dergleichen durchführt, um Fehler auszugleichen, die durch Änderungen der Orientierung des Landfahrzeugs auf unebenem Gelände bedingt werden.

Das Bezugssystemkompensationssystem ist mit einem globalen Positionsbestimmungssystem-Empfänger verbunden, der ein Positionssignal des (in der Regel satellitengebundenen) globalen Positionssystems empfängt und daraus Navigationsinformationen ableitet einschließlich der Position (z. B. Länge und Breite) und der Richtung des Landfahrzeugs. Die Richtungsinformation kann anhand des Doppler-Effekts aus den empfangenen Signalen abgeleitet werden oder aus dem Vergleich zweier nacheinander ermittelter Positionen. Das Bezugssystemkompensationssystem ersetzt die vom Positionsbestimmungssystem-Empfänger ermittelte Position und Richtung mit einer korrigierten Position und einer korrigierten Richtung, die anhand von Messwerten eines Gyroskops zur Erfassung des Gierens und eines Beschleunigungsmessers zur Erfassung des Rollwinkels hinsichtlich des Gierwinkels und des Rollwinkels des Fahrzeugs korrigiert sind, um für einen Referenzpunkt des Landfahrzeugs korrigierte Navigationsinformation bereitzustellen, die zur Navigation oder zum selbsttätigen Lenken des Landfahrzeugs dienen kann.

Hierbei wird eine seitlichen Versatzentfernung zwischen der mit dem globalen Positionsbestimmungssystem bestimmten Position und der aktuellen Position eines gewünschten Referenz- oder Kontrollpunkts für das Landfahrzeug berücksichtigt. Die seitliche Versatzentfernung wird anhand einer gemessenen seitlichen Beschleunigung und einer durch zentrifugale Beschleunigung bedingten Entfernung berechnet, wobei die durch zentrifugale Beschleunigung bedingte Entfernung anhand von Änderungen in der Position des Landfahrzeugs in Bezug auf die Richtung des Landfahrzeugs bestimmt wird.

Das Bezugssystemkompensationssystem kann außerdem die Neigung unebenen Geländes bestimmen. Die Neigung kann verwendet werden, um die effektive Spurbreite eines mit dem Landfahrzeug verbundenen (z. B. davon gezogenen oder daran befestigten) Arbeitsgeräts zu bestimmen.

In den Zeichnungen ist ein nachfolgend näher beschriebenes Ausführungsbeispiel der Erfindung dargestellt. Es zeigt:

Fig. 1    ein grobes Blockdiagramm eines erfindungsgemäßen Navigationssystems,

Fig. 2    ein detaillierteres Blockdiagramm eines erfindungsgemäßen Navigationssystems, das auf einem Empfänger für ein globales Positionsbestimmungssystem basiert und mit einem Bezugssystemkompensationssystem zusammenwirkt,

Fig. 3    eine Seitenansicht eines Landfahrzeugs, das unebenes Gelände überquert und ein erfindungsgemäßes Navigationssystem verwendet,

Fig. 4    eine Frontansicht des in Fig. 3 gezeigten Landfahrzeugs, in der außerdem der Effekt des Rollwinkels des Landfahrzeugs auf dessen Position illustriert wird,

Fig. 5    eine Draufsicht auf das Landfahrzeug aus Figur 3, in dem weiterhin der Effekt des Gierwinkels des Landfahrzeugs auf dessen Fahrtrichtung gezeigt wird,

Fig. 6    ein Blockdiagramm, in dem das Bezugssystemkompensationssystem des in Figur 2 gezeigten Navigationssystems gezeigt wird,

Fig. 7    eine Draufsicht auf das Landfahrzeug aus Figur 3, in dem der Effekt der Neigung des von dem Landfahrzeug überfahrenen Geländes auf die effektive Arbeitsbreite eines vom Landfahrzeug gezogenen Arbeitsgeräts gezeigt wird,

Fig. 8    eine schematische Ansicht, in der weiterhin die Beziehung zwischen der effektiven Arbeitsbreite des Landfahrzeugs oder davon gezogenen Arbeitsgeräts und der Neigung des von dem Landfahrzeug befahrenen Geländes dargestellt wird, und

Fig. 9    ein Flussdiagramm, in dem ein Verfahren zur Verbesserung von Positions- und Richtungsinformationen dargestellt ist, die auf dem globalen Positionsbestimmungssystem basieren und von einem Navigationssystem in einem Landfahrzeug verwendet werden, wobei die Positions- und Richtungsinformation hinsichtlich des Roll- und Schlingerwinkels bezugssystemkompensiert werden, wenn das Landfahrzeug unebenes Gelände überquert.

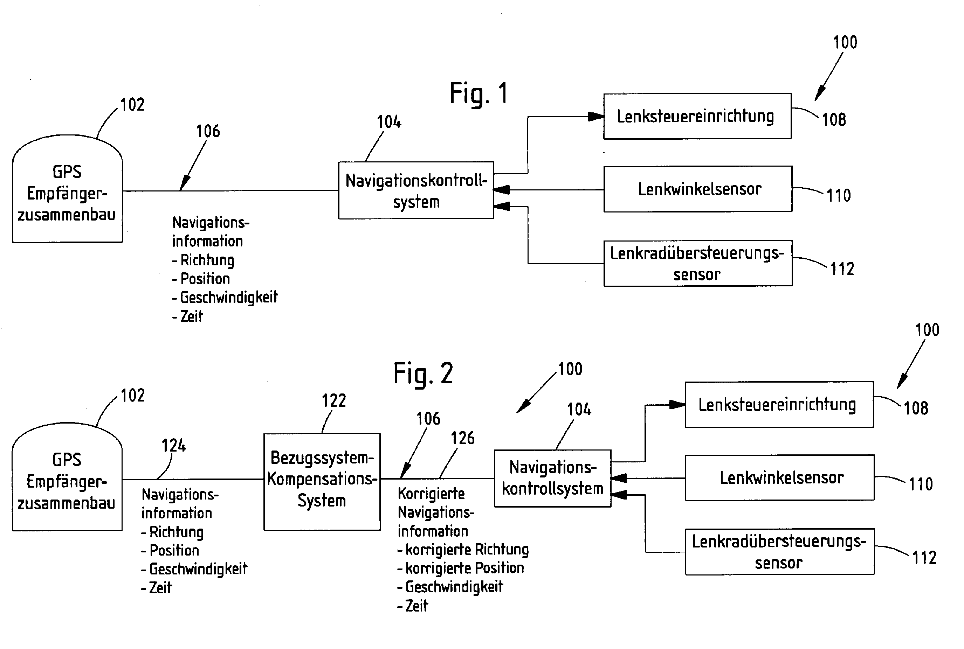

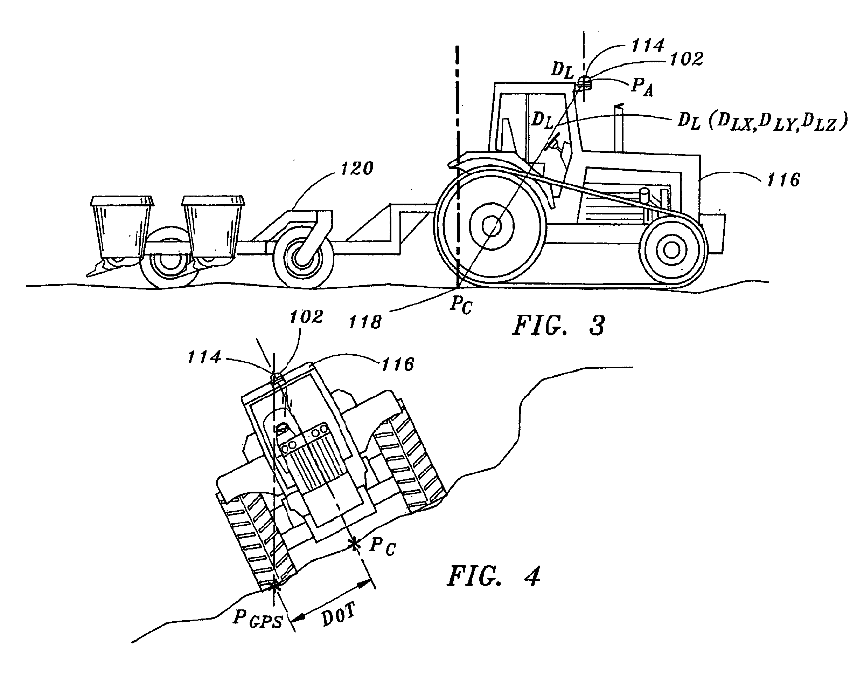

Die Figuren 1 und 2 illustrieren ein Beispiel für ein erfindungsgemäßes Navigationssystem 100, das auf einem globalen Positionsbestimmungssystem basiert. Das Navigationssystem 100 stellt eine auf dem globalen Positionsbestimmungssystem basierende Navigation und/oder Lenkung für ein Landfahrzeug 116 (s. Figur 3) bereit, insbesondere für ein landwirtschaftliches Landfahrzeug, wie einen Traktor, Mähdrescher, Sprüher, Baumwollpflücker, Feldhäcksler oder dergleichen, wenn das Landfahrzeug 116 einen Weg oder eine Spur auf einem Feld zurücklegt oder überquert. Das Navigationssystem 100 kann eine Bezugssystemkompensation verwenden, um vom Positionsbestimmungssystem bereitgestellte Navigationsparameter wie Position (d. h. Länge und Breite) und Richtung hinsichtlich Fehlern zu korrigieren, die durch Änderungen der Orientierung des Landfahrzeugs 116 (d. h. Rollen und Gieren des Landfahrzeugs 116) bedingt werden, wenn es unebenes Gelände überfährt. Das Navigationssystem 100 kann auch eingerichtet sein, den effektiven Spurabstand des Landfahrzeugs 116 oder eines von ihm gezogenen Arbeitsgeräts zu bestimmen, indem es die Neigung des von dem Landfahrzeug befahrenen Geländes feststellt.

In der in Figur 1 dargestellten Ausführungsform umfasst das Navigationssystem 100 einen Positionsbestimmungssystem-Empfänger 102 und ein Navigationskontrollsystem 104, die durch eine Busarchitektur 106 untereinander verbunden sind. Der Positionsbestimmungssystem-Empfänger 102 empfängt Positionssignale vom globalen Positionsbestimmungssystem und erzeugt Positionsbestimmungssystem-basierte Navigationsinformation einschließlich der Position (d. h. Länge und Breite), Richtung, Geschwindigkeit, Zeit und dergleichen, zur Verwendung durch das Navigationskontrollsystem 104 und anderer Komponenten des Navigationssystems 100. Bei Ausführungsbeispielen empfängt der Positionsbestimmungssystem-Empfänger 102 Positionssignale vom Global Positioning System (GPS), einem weltraumbasierten Radio-Navigationssystem, das von der US-Luftwaffe für die Regierung der USA betrieben wird. Es ist jedoch anzumerken, dass der Positionsbestimmungssystem-Empfänger 102 alternativ oder zusätzlich zur Verwendung mit anderen radiobasierten Navigations- bzw. globalen Positionsbestimmungssystemen angepasst sein könnte, wie dem von der russischen Weltraumorganisation für die russische Förderation betriebenen Glonass-Navigationssatellitensystem oder dem zukünftigen europäischen Galileo-System. In Ausführungsformen der Erfindung kann der Positionsbestimmungssystem-Empfänger 102 auch eingerichtet sein, verbesserte Positionsinformationen zu empfangen und zu verwenden, die von differentiellen globalen Positionsbestimmungs-Systemen und großflächigen differentiellen globalen Positionsbestimmungs-Systemen (wide area differential GPS, WADGPS) bereitgestellt werden, wie dem von Deere & Company aus Moline, Illinois, USA, entwickelten Starfire-WDGPS-System oder dem von der Bundesluftfahrtverwaltung der Regierung der USA bereitgestellten Wide Area Augmentation System (WAAS), oder dergleichen. Bei derartigen Ausführungsformen kann der Positionsbestimmungssystem-Empfänger 102 einen Radioempfänger zum Empfang von differentieller Fehlerkorrekturinformation umfassen oder damit verbunden sein.

Das Navigationskontrollsystem 104 verwendet die vom Positionsbestimmungssystem-Empfänger 102 bereitgestellte Navigationsinformation, um dem Bediener des Landfahrzeugs 116 Navigations- oder Führungsinformation bereitzustellen. Zusätzlich verwendet das Navigationskontrollsystem 104 die Information, um Lenksteuereinrichtungen 108 anzusteuern, die das Landfahrzeug 116 entlang eines gewünschten Wegs oder einer gewünschten Spur lenken, falls ein automatisches Lenken angewandt wird. Beispielsweise könnte das Navigationssystem 104 in landwirtschaftlich eingesetzten Ausführungsformen der Erfindung (in denen das Navigationssystem 104 beispielsweise in landwirtschaftlichen Fahrzeugen wie Traktoren, Mähdreschern, Sprühfahrzeugen, Baumwollpflückern oder dergleichen verwendet wird) eingerichtet sein, zu navigieren und optional das Landfahrzeug 116 entlang im Wesentlichen paralleler Wege oder Spuren über ein Feld zu lenken, um auf dem Feld Bodenbearbeitung durchzuführen, Chemikalien wie Herbizide oder Pestizide auf Pflanzen auszubringen, die auf dem Feld wachsen, die Pflanzen zu ernten, und dergleichen. Diese Spuren haben vorzugsweise eine Breite (W), die der Breite des vom Landfahrzeug 116 bewegten Arbeitsgeräts 120 entspricht und sind derart beabstandet, dass sie im Wesentlichen parallel und tangential zueinander verlaufen, um Lücken oder Überlappungen bei der Bearbeitung des Feldes zu vermeiden.

Bei Ausführungsformen des Navigationssystems 100, in denen automatisches Lenken bereitgestellt ist, stellt ein Lenkwinkelsensor 110 dem Navigationskontrollsystem 104 Rückkopplungssignale bereit, die den aktuellen Winkel wiedergeben, der von den Lenksteuereinrichtungen 108 angesteuert wurde, um es dem Navigationskontrollsystem 104 zu erlauben, den eingeschlagenen Weg oder die Spur zu steuern, indem die aktuell gesteuerte Richtung vom Lenkwinkelsensor 110 mit der vom Positionsbestimmungssystem-Empfänger 102 bereitgestellten Position und Richtung verglichen wird. Bei Ausführungsbeispielen kann auch ein Lenkradübersteuerungssensor 112 bereitgestellt sein. Der Lenkradübersteuerungssensor 112 misst die Bewegung des Lenkrads des Landfahrzeugs 116 durch den Bediener, um es dem Bediener des Landfahrzeugs 116 zu ermöglichen, vom Navigationskontrollsystem 104 bereitgestellte automatische Lenkfunktionen manuell zu übersteuern. Auf diese Weise kann der Bediener Kurskorrekturen durchführen oder das Landfahrzeug 116 manuell lenken, um ein Hindernis auf seinem Weg zu vermeiden.

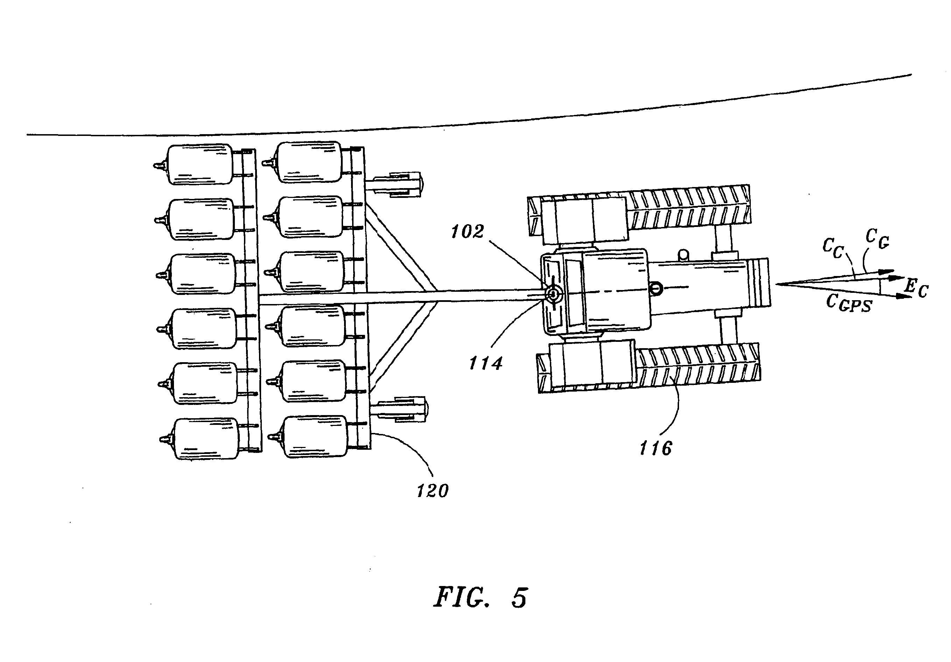

Wie in der Figur 3 gezeigt, umfasst der Positionsbestimmungssystem-Empfänger 102 des in der Figur 1 illustrierten Navigationssystems 100 eine Antenne 114 für das globale Positionsbestimmungssystem, die an dem Landfahrzeug 116 an einem Punkt ($P_A$) befestigt ist, der eine freie Sicht zum Himmel und somit zu den Satelliten des globalen Positionsbestimmungssystems ermöglicht. Der Punkt ($P_A$), an dem die Antenne 114 angebracht ist, ist von dem gewünschten Referenz- oder Kontrollpunkt ($P_C$) des Landfahrzeugs 116 und des gezogenen Arbeitsgeräts 120 (z. b. einem Punkt auf dem Boden 118 unterhalb des Landfahrzeugs 116) um einen Abstand entfernt, der allgemein im Stand der Technik als Hebelarm ($D_L$) bezeichnet wird und eine im Wesentlichen vertikale Hebelarmkomponente ($D_{Lz}$) und im Wesentlichen horizontale Hebelarmkomponenten ($D_{Lx}$) und ($D_{Ly}$) aufweist. Das in der Figur 1 dargestellte Navigationssystem 104 stellt somit eine hochgenaue Navigation und/oder Lenkung des Landfahrzeugs 116 bei im Wesentlichen ebenem Gelände bereit, da die horizontalen und vertikalen Hebelarmkomponenten $D_{Lx}$, $D_{Ly}$, $D_{Lz}$ relativ zueinander konstant bleiben. Wenn jedoch unebenes Gelände (z. B. Gelände mit einer Neigung, Hügeln, Tälern, Furchen, Höckern oder dergleichen) überfahren wird, ändern sich die horizontalen und vertikalen Hebelarmkomponenten $D_{Lx}$, $D_{Ly}$, $D_{Lz}$ relativ zueinander, wenn das Landfahrzeug rollt (sich zur Seite neigt, auch als Schlingern bezeichnet) und giert (in der horizontalen Ebene um die vertikale Achse rotiert). Als Folge können die vom globalen Positionsbestimmungssystem bestimmte Position und Richtung des Landfahrzeugs 116 inkorrekt sein, was in der Figur 4 gezeigte Querspurfehler ($D_{OT}$) und/oder in Figur 5 gezeigte Richtungsfehler ($E_C$) zur Folge hat.

Um diese Fehler auszugleichen und es somit dem Landfahrzeug 116 zu ermöglichen, genauer über unebenes Gelände gelenkt zu werden, schlägt die vorliegende Erfindung ein Bezugssystemkompensationssystem 122 vor, das zwischen dem Positionsbestimmungssystem-Empfänger 102 und dem Navigationskontrollsystem 104 eingefügt ist, wie in der Figur 2 dargestellt. Das Bezugssystemkompensationssystem 122 misst das Rollen und Gieren des Landfahrzeugs 116 (s. Figuren 3 bis 5), um Fehler in der vom Positionsbestimmungssystem-Empfänger 102 bereitgestellten Positions- und Richtungsinformation auszugleichen, wenn das Landfahrzeug 116 unebenes Gelände überquert. In der in Figur 2 dargestellten Ausführungsform kommuniziert das Bezugssystemkompensationssystem 122 mit dem Positionsbestimmungssystem-Empfänger über einen zugeordneten, privaten (exklusiv genutzten) Bus 124. Das Bezugssystemkompensationssystem 122 streift die Positionsinformation (z. B. Länge und Breite) und die Richtungsinformation von der vom Positionsbestimmungssystem-Empfänger 102 erzeugten Navigationsinformation ab und ersetzt diese Information durch korrigierte Positionsinformation (z. B. Länge und Breite) und Richtungsinformation, die hinsichtlich der Fehler korrigiert ist, die durch Rollen und Gieren des Landfahrzeugs (beispielsweise durch Seitenneigungen, Hügel etc. bedingt) bewirkt werden, bevor die Informationen über den Systembus 126 an das Navigationssystem 104 gesandt werden. Das Bezugssystemkompensationssystem 104 überträgt alle anderen vom Positionsbestimmungssystem-Empfänger 102 bereitgestellten Informationen (z. B. Geschwindigkeit, Zeit und dergleichen) vom privaten Bus 124 ohne Änderungen auf den Systembus 126. Außerdem kann das Bezugssystemkompensationssystem 122 Neigungsmessungen durchführen, die über den Systembus 124 an das Navigationssystem 104 mit der korrigierten Positions- und Richtungsinformation übertragen werden, da sich der Abstand zwischen benachbarten Überfahrten für ein Arbeitsgerät 120 mit der Neigung ändern kann. Auf diese Weise können neigungskompensierte Spurweiten bzw. Arbeitsabstände für das Landfahrzeug 116 oder das davon bewegte Arbeitsgerät 120 festgelegt werden.

Bei Ausführungsformen ist die vom Bezugssystemkompensationssystem 122 bereitgestellte bezugssystemkompensierte Navigationsinformation in einem Format, das mit dem Format der vom Positionsbestimmungssystem-Empfänger 102 bereitgestellten Navigationsinformation identisch ist. Somit kann die bezugssystemkompensierte Navigationsinformation einschließlich der bezugssystemkompensierten Positions- und Richtungsinformation vom Bezugssystemkompensationssystem 122 gemeinsam mit der unkompensierten Information wie Geschwindigkeit und Zeit und dgl., die vom Positionsbestimmungssystem-Empfänger 102 bereitgestellt wird und durch das Bezugssystemkompensationssystem 122 auf den Systembus 124 übertragen wird, durch das Navigationskontrollsystem 104 ohne zusätzliche Modifikation oder Formatierung genutzt werden, um dem Bediener Navigationsinformation bereitzustellen und das Landfahrzeug 116 optional ohne Modifikation der Information zu lenken. Auf diese Weise kann das Bezugssystemkompensationssystem 122 ohne Änderung bestehender Komponenten des Navigationssystems 100 (wie des Positionsbestimmungssystems-Empfängerzusammenbaus 102 oder des Navigationskontrollsystems 104) dem Navigationssystem 100 hinzugefügt werden.

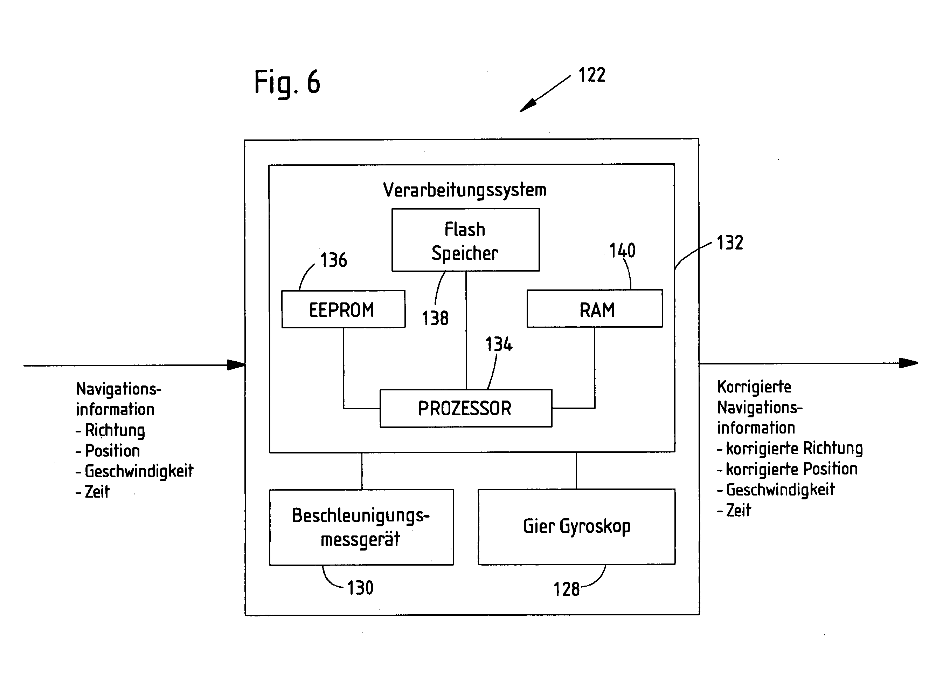

Es wird auf die Figur 6 verwiesen, in der das Bezugssystemkompensationssystem 122 des in Figur 2 gezeigten Navigationssystems 100 dargestellt ist. Das Bezugssystemkompensationssystem 122 umfasst ein Gyroskop (Kreisel) 128 zur Messung des Gierwinkels des Landfahrzeugs 116 (Figur 3), ein Beschleunigungsmessgerät 130 (Akzelerometer) zur Messung des Rollwinkels des Landfahrzeugs 116, wenn es unebenes Land überquert, und ein Verarbeitungssystem 132, das mit dem Gyroskop 128 und dem Beschleunigungsmessgerät 130 verbunden ist, um die Positions- und Richtungsinformation für das Landfahrzeug 116 zu erzeugen. Wie in der Figur 6 dargestellt, kann das Verarbeitungssystem 132 in einer Ausführungsform einen Prozessor 134 zur Durchführung der Positions- und Richtungsberechnungen, Kontrolle der Kommunikation mit anderen Komponenten des Navigationssystems 100 (s. Figur 1 und 2), Durchführen von Fehlerdiagnosen und dergleichen sowie Speicher aufweisen, wie ein EEPROM (electrically erasable programmable read-only memory) 136, Flash Memory 138 und RAM (random access memory) 140 zur Speicherung von Software und/oder Firmware für das Verarbeitungssystem 132 und Parameter, die von dem Verarbeitungssystem 132 zur Berechnung der korrigierten Position und Richtung verwendet werden.

Bei Ausführungsformen der Erfindung umfasst das Gyroskop 128 einen Kreisel, der die Gierrate des Landfahrzeugs 116 misst. Das Verarbeitungssystem 132 verwendet die gemessene Gierrate, um eine wahre Fahrzeugrichtung (d. h. Kreiselrichtung) zu bestimmen, was Fehler in der mit dem globalen Positionsbe-stimmungssystem bestimmten Richtung kompensiert, die durch Gieren und Rollen bedingt werden. Die vom Positionsbestimmungssystem-Empfänger 102 bereitgestellte Richtung wird verwendet, die Drift des Gyroskops 128 zu begrenzen. Die mit dem globalen Positionsbestimmungssystem bestimmte Richtung kann auch verwendet werden, die Ruheposition (Offset) und den Skalierungsfaktor des Gyroskops 128 während des Betriebs des Bezugssystemkompensationssystems 122 zu kalibrieren. Da die mit dem Gyroskop 128 gemessene Richtung effektiv eine Richtungsmessung bereitstellt, wie sie am Schwenkpunkt (z. B. der Hinterachse eines Traktors o. dgl.) des Landfahrzeugs 116 beobachtet wird, wird die gyroskopische Richtung auf den Punkt an dem Landfahrzeug 116 projiziert, an dem die Antenne 114 des Positionsbestimmungssystem-Empfängers 102 physisch angeordnet ist (z. B. Punkt (P$_A$) des Landfahrzeugs 116 in Figur 3), um eine korrigierte Richtung bereitzustellen, die mit der Richtung konsistent ist, die aus der vom Positionsbestimmungssystem-Empfänger 102 bereitgestellten Richtungsinformation entfernt wird. Die berichtigte Richtung wird dann über den Systembus 104 dem Navigationskontrollsystem 104 zugeführt.

Vorzugsweise bestimmt das Verarbeitungssystem 132 des Bezugssystemkompensationssystems 122 die berichtigte Richtung unter Verwendung der Gleichung:

$$C_C = [G_R/F_{MEAS}] + [(C_{GPS}-C_G) \cdot K_C/CFR] + Pf \ , \ (Gl. \ 1)$$

wobei $C_C$ die korrigierte Richtung ist, $G_R$ die Gierrate, $F_{MEAS}$ die Messfrequenz der Gierrate durch das Gyroskop 128, $C_{GPS}$ die anhand der Navigationsinformation, die vom Positionsbestimmungssystem-Empfänger (102) erzeugt wurde, bestimmte Richtung, $C_G$ die mit dem Gyroskop 128 bestimmte Richtung, CFR eine Richtungsfilterauflösungsvariable, $K_C$ ein variabler Filterwert mit CFR > $K_C$ > ein positiver Minimalwert, und Pf der Wert, der die korrigierte Richtung von einem Schwenkpunkt des Landfahrzeugs 116 auf einen Punkt projiziert, an dem die Antenne 114 des Positionsbestimmungssystem-Empfängers 102 an dem Landfahrzeug 116 angebracht ist.

Wie man anhand der Gl. 1 mit Verweis auf die Figur 5 erkennt, übernimmt die gyroskopische Richtung $C_G$ mit der Zeit einen Vorrang über die mit dem Positionsbestimmungssystem gemessene Richtung $G_{GPS}$. Für große Diskrepanzen zwischen der mit GPS gemessenen Richtung $G_{GPS}$ und der gyroskopischen Richtung $C_G$ wird die Filtervariable $K_C$ gleich der Richtungsfilterauflösungsvariablen CFR gesetzt, was die gyroskopische Richtung $C_G$ gleich der aktuellen Positionsbestimmungssystem-Richtung $C_{GPS}$ setzt. Danach wird der Wert der Filtervariablen Kc über die Zeit auf einen minimalen Wert vermindert, was der gyroskopischen Richtung $C_G$ einen Vorrang über der Positionsbestimmungssystem-Richtung $C_{GPS}$ gibt. Die Filtervariable Kc hat vorzugsweise einen von Null verschiedenen Minimalwert, so dass zumindest ein Teil der Positionsbestimmungssystem-Richtung $C_{GPS}$ durch das Bezugssystemkompensationssystem 122 als Referenzwert in die Berechnung der korrigierten Richtung $C_c$ aufgenommen wird. Zusätzlich können die Skalierungs- und Offsetwerte unter den geeigneten Bedingungen angepasst werden, um die Drift des Gyroskops 128 zu kompensieren.

Es wird wieder auf die Figur 6 Bezug genommen, gemäß der ein Beschleunigungsmessgerät 130 zur Messung der seitlichen Beschleunigung des Landfahrzeugs 116 vorgesehen ist. Das Beschleunigungsmessgerät 130 misst keine seitliche Beschleunigung, wenn das Landfahrzeug 116 nivelliert ist (d. h. es im Wesentlichen ebenes Gelände durchfährt). Wenn das Landfahrzeug 116 jedoch unebenes Gelände durchfährt, bedingt eine seitliche Neigung des Beschleunigungsmessgeräts 130 aufgrund einer Rollbewegung des Landfahrzeugs 116, dass das Beschleunigungsmessgerät 130 eine positive oder negative Beschleunigungskomponente in Bezug auf die Schwerkraft erfasst.

Das Verarbeitungssystem 132 verwendet die vom Beschleunigungsmessgerät 130 gemessene seitliche Beschleunigung, um eine seitliche Versatzentfernung ($D_{OT}$) für das Landfahrzeug 116 zu berechnen, die eine anhand des Bezugssystems des Landfahrzeugs 116 berechnete Abschätzung der seitlichen Entfernung zwischen der mit dem globalen Positionsbestimmungssystem bestimmten Position ($P_{GPS}$) und der aktuellen Position eines gewünschten Referenz- oder Kontrollpunkts für das Landfahrzeug 116 beinhaltet, typischer Weise eines auf den Boden unterhalb der Antenne 114 auf den Boden projizierten Punkts (d. h. den Punkt ($P_C$) in den Figuren 3 und 4). Die seitliche Versatzentfernung $D_{OT}$ kann somit als Höhe des Beschleunigungsmessgeräts 130 oberhalb des Referenzpunkts ($P_C$) bestimmt werden (oder alternativ als Höhe des Bezugssystemkompensationssystems 122 oberhalb des Referenzpunkts ($P_C$), falls das Bezugssystemkompensationssystem 122 eine einzelne Einheit umfasst, die das Beschleunigungsmessgerät 130 beinhaltet), multipliziert mit dem Sinus des seitlichen Neigungswinkels des Landfahrzeugs 116. Die seitliche Versatzentfernung $D_{OT}$ kann dann verwendet werden, um die mit dem globalen Positionsbestimmungssystem bestimmte Position ($P_{GPS}$) zu korrigieren, so dass man eine korrigierte Position für das Landfahrzeug 116 erhält, die bezüglich des Hebelarms $D_L$ kompensiert ist und der aktuellen Position des Landfahrzeugs 116 besser entspricht.

Bei der Berechnung der korrigierten Position kann das Verarbeitungssystem 132 auch die zentrifugalen (Hochgeschwindigkeits-) Beschleunigungen kompensieren, die bei Drehungen des Landfahrzeugs 116 auftreten. Diese Kompensation wird in einer Ausführungsform der Erfindung durch einen dynamischen Vergleich der Änderungen der Position des Landfahrzeugs 116 gegenüber der Richtung des Landfahrzeugs 116 erzielt. Daher kann die seitliche Versatzentfernung $D_{OT}$ als Summe der Entfernung aufgrund der Neigungsbeschleunigung und der Entfernung aufgrund der Hochgeschwindigkeitsbeschleunigung berechnet werden, wobei die Neigungsbeschleunigung gleich der vom Beschleunigungsmessgerät 130 gemessenen seitlichen Beschleunigung abzüglich jeglicher radialen Beschleunigung und der schnellen Rollbeschleunigung des Landfahrzeugs 116 ist. Jedoch ist der Sinus des Neigungswinkels des Landfahrzeugs 116 gleich der vom Beschleunigungsmessgerät 130 bestimmten seitlichen Beschleunigung (A) geteilt durch die Gravitationsbeschleunigung (g). Somit ist die Entfernung aufgrund der Neigungsbeschleunigung gleich der Höhe des Beschleunigungsmessgeräts ($H_A$) multipliziert mit der mit dem Beschleunigungsmessgerät 130 gemessenen seitlichen Beschleunigung (A) geteilt durch die Gravitationsbeschleunigung (g).

Das Verarbeitungssystem 132 kann die seitliche Versatzentfernung $D_{OT}$ für das Landfahrzeug 116 somit anhand der Gleichung:

$$D_{OT} = (H_A \cdot A/g) + D_{HSA} \quad (Gl. \ 2)$$

bestimmen, wobei $D_{OT}$ die seitliche Versatzentfernung des Landfahrzeugs 116 ist, $H_A$ die Höhe des Beschleunigungsmessgeräts 130 über einem gewünschten Referenz- oder Kontrollpunkt oberhalb des Bodens (z. B. der Punkt ($P_C$)), A die seitliche Beschleunigung, die mit dem Beschleunigungsmessgerät 130 bestimmt wird, g die Gravitationsbeschleunigung, und $D_{HSA}$ die sich aufgrund gemessener zentrifugaler (schneller) Beschleunigung ergebende Entfernung, die in Ausführungsbeispielen durch dynamische Vergleiche von Änderungen in der Position des Landfahrzeugs 116 relativ zur Richtung des Landfahrzeugs 116 gemessen wird. Vorzugsweise wird die Versatzentfernung $D_{OT}$ in Längen- und Breitenkomponenten aufgeteilt, sobald sie berechnet wurde, und der mit dem globalen Positionsbestimmungssystem ermittelten Position hinzugefügt, die ebenfalls in Länge und Breite gemessen wird, um eine korrigierte Position (d. h. Breite und Länge) für das Landfahrzeug 116 bereitzustellen.

Bei landwirtschaftlichen Anwendungen, in denen das Landfahrzeug 116 mit einem Arbeitsgerät 120 zum Abgeben von Material, wie Saatgut, Dünger, Pestiziden, Herbiziden oder dergleichen, auf die Oberfläche eines Felds versehen ist (z. B. zieht das Landfahrzeug 116 das Arbeitsgerät 120 oder es ist alternativ an dem Landfahrzeug 116 befestigt), kann der Abstand benachbarter Spuren, entlang denen das Landfahrzeug fährt, als Funktion des Gradienten oder der Neigung des Geländes variieren, da die Schwerkraft das abgegebene (z. B. getropfte, gesprühte oder dgl.) Material nach unten zieht. Wenn das Landfahrzeug 116 somit entlang paralleler Spuren über nicht-ebenes Gelände gelenkt wird, das eine seitliche Neigung gegenüber dem Arbeitsgerät 120 hat, kann ein Überlappen tangentialer Spuren auftreten, wenn die ausgewählte Spurbreite (Arbeitsbreite) zu groß ist. Dieses Überlappen hat eine ungleichmäßige Anwendung des ausgebrachten Materials zur Folge, Verschwendung von Material und möglicherweise eine Verminderung des Ertrags des Felds, wenn der Spurabstand nicht entsprechend angepasst wird.

Bei Ausführungsbeispielen der Erfindung kann die seitliche Beschleunigung, die von dem Beschleunigungsmessgerät 130 gemessen wird, vom Verarbeitungssystem 132 auch verwendet werden, um den Rollwinkel des Landfahrzeugs 116 festzustellen, anhand dem die Neigung (S) des vom Landfahrzeug 116 befahrenen Geländes festgestellt werden kann. Die Neigung (S) kann dann vom Navigationskontrollsystem 104 verwendet werden, um die effektive Spurbreite oder Arbeitsbreite des Arbeitsgeräts 120 festzustellen. Auf diese Weise können für das Arbeitsgerät 120 neigungskompensierte Arbeitsbreiten und Spurabstände in Echtzeit festgestellt und angepasst werden, wenn die Neigung des vom Arbeitsgerät 120 überfahrenen Geländes ansteigt oder absinkt.

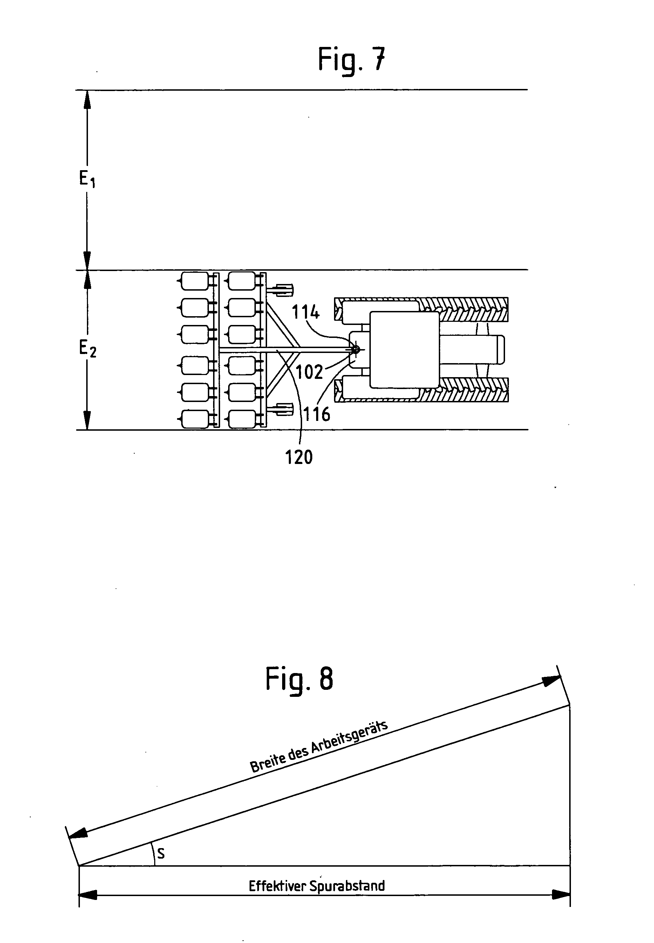

Die Figuren 7 und 8 illustrieren die Auswirkung der Neigung (S) des von einem Landfahrzeug 116 überfahrenen Geländes auf die effektive Spurbreite (E) eines von dem Landfahrzeug 116 gezogenen Arbeitsgeräts 120. Wie in der Figur 7 dargestellt, sinkt die effektive Spurbreite (E), wenn die seitliche Neigung oder der seitliche Gradient des von dem Landfahrzeug 116 überquerten Geländes ansteigt. Die effektive Spurbreite ($E_1$) einer vom Landfahrzeug 116 gefolgten Spur bei der Überquerung von Gelände mit einer seitlichen Neigung wird größer sein als die effektive Spurbreite ($E_2$) einer von dem Landfahrzeug 116 auf einem Gelände mit nur wenig oder keiner Neigung abgefahrenen Spur. Somit steht die effektive Spurbreite (E) für ein Arbeitsgerät 120 an einer gegebenen Neigung (S) mit der Spurbreite des Arbeitsgeräts 120 auf ebenem Gelände in folgender Beziehung, wie anhand der Figur 8 erkennbar ist:

$$E = I \cdot \cos (S) \quad (Gl. \ 2)$$

wobei E die effektive Spurbreite, I die Spurbreite des Arbeitsgeräts auf ebenem Gelände und S die Neigung ist.

Bei Ausführungsbeispielen kann das Bezugssystemkompensationssystem 122 vor oder während der Benutzung kalibriert werden, um die Genauigkeit der korrigierten Positions- und Richtungsbestimmung zu verbessern. Das Beschleunigungsmessgerät 130 kann beispielsweise einen oder mehrere Temperatursensoren zur Messung der Temperatur des Beschleunigungsmessgeräts 130 aufweisen, wodurch es dem Verarbeitungssystem 132 möglich wird, Variationen in der vom Beschleunigungsmessgerät 130 gemessenen seitlichen Beschleunigung auszugleichen, die durch Temperaturinduzierte Offsetfehler und Empfindlichkeitsfehler des Beschleunigungsmessgeräts 130 bedingt sind. Um die Temperaturreaktion des Beschleunigungsmessgeräts 130 zu kalibrieren, kann das Bezugssystemkompensationssystem 122 unter bekannten Bedingungen (z. B. zum Zeitpunkt der Herstellung) kalibriert werden, um den Ausgangswert des Temperatursensors mit der aktuellen Umgebungstemperatur in Beziehung zu setzen und den Offsetfehler über einen Temperaturbereich zu messen. Das Verarbeitungssystem 132 kann die Kalibrierdaten in einem Speicher ablegen (z. B. im Flash Memory 138), um Korrekturen an den Rollwinkelmessungen abhängig von der Temperatur des Beschleunigungsmessgeräts 130 durchführen zu können.

Das Bezugssystemkompensationssystem 122 kann weiterhin zur Identifizierung eines Rollwinkels von Null Grad (0°) des Landfahrzeugs 116 eingerichtet werden. Diese Kalibrierung kann jedes Mal erfolgen, wenn das Bezugssystemkompensationssystem 122 im Navigationssystem 104 eines Landfahrzeugs 116 installiert wird. Der Bediener des Landfahrzeugs 116 kann diese Kalibrierung manuell durchführen, indem er das Landfahrzeug 116 in einer stationären, ebenen Position positioniert und dem Verarbeitungssystem 132 mitteilt, dass das Landfahrzeug 116 stationär und eben steht (z. B. durch im Navigationssystem 104 bereitgestellte Eingabeelemente). Alternativ kann der Bediener den Rollwinkel von Null Grad kalibrieren, indem er das Landfahrzeug 116 entlang eines geraden Wegs rückwärts und vorwärts fährt, was es dem Bezugssystemkompensationssystem 122 ermöglicht, den Rollwinkel von Null Grad durch Vergleiche der Rollwinkelmessungen des Landfahrzeugs 116 an unterschiedlichen Punkten entlag des zurückgelegten Wegs zu bestimmen.

Da das Bezugssystemkompensationssystem 122 nicht selbst Positions- und Richtungsinformationen erzeugt, sondern stattdessen Trägheitsmessungen verwendet, um die vom Positionsbestimmungssystem-Empfänger 102 bereitgestellte Positions- und Richtungsinformation zu verbessern, reicht es hin, dass das Gyroskop 128 und das Beschleunigungsmessgerät 130 nur jeweils ein einziges Beschleunigungsmessgerät 130 zur Messung der seitlichen Beschleunigung des Landfahrzeugs 116 und ein einzelnes Gyroskop 128 zur Messung der Gierrate des Landfahrzeugs 116 umfassen. Deshalb benötigt das erfindungsgemäße Bezugssystemkompensationssystem 122 nicht die volle Anzahl an Gyroskopen und Beschleunigungsmessgeräten, die in bekannten Trägheitsmesssystemen typischerweise erforderlich sind. Das Bezugssystemkompensationssystem 122 ist daher einfacher, enthält weniger Komponenten und ist preiswerter herstellbar als derartige Systeme. Es ist jedoch anzumerken, dass das Bezugssystemkompensationssystem 122 zusätzliche Gyroskope als Redundanz umfassen kann oder um eine verbesserte Genauigkeit der Messungen der Gierrate und der seitlichen Beschleunigung zu ermöglichen.

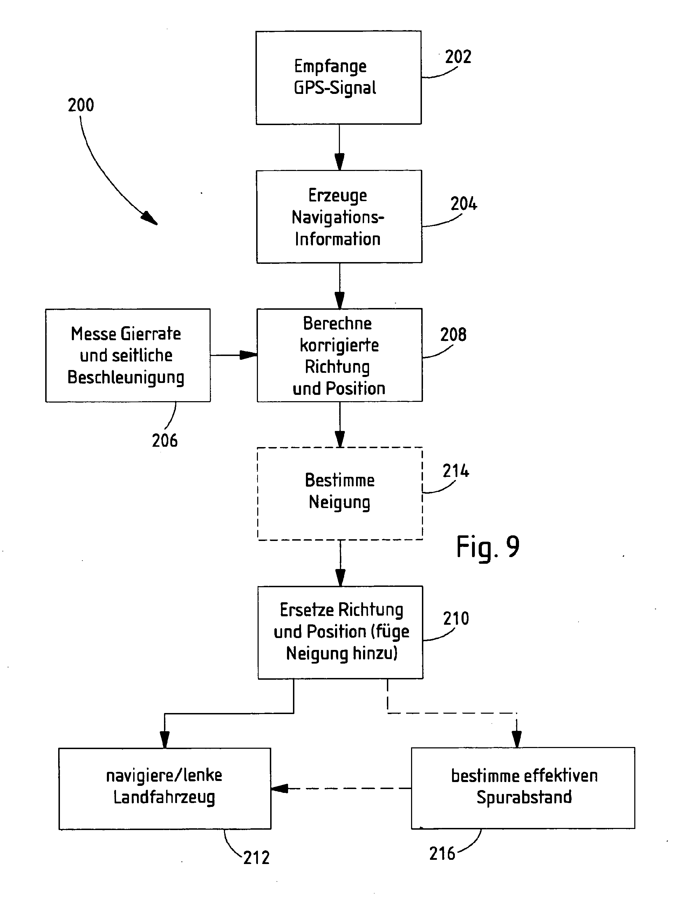

Es wird nun auf die Figur 9 verwiesen, in der ein Beispiel für ein Verfahren 200 dargestellt ist, mit dem auf einem globalen Positionsbestimmungssystem basierende Positions- und Richtungsinformationen verbessert werden können, die von einem Navigationssystem 104 in einem Landfahrzeug 116 verwendet werden, wobei die Positions- und Richtungsinformation durch Trägheitsmessung hinsichtlich der Gier- und Rollbewegung des Fahrzeugs kompensiert wird, wenn das Fahrzeug unebenes Gelände überfährt. Wie in der Figur 9 dargestellt, werden in einem Schritt 202 globale Positionsbestimmungssignale von einem globalen Positionsbestimmungssystemempfänger empfangen und im Schritt 204 zur Erzeugung von auf dem globalen Positionsbestimmungssystem basierender Navigationsinformation verwendet einschließlich der Position (z. B. Breite und Länge), Richtung oder Orientierung, Geschwindigkeit, Zeit und dergleichen. Im Schritt 206 werden auch die Gierrate und die seitliche Beschleunigung des Landfahrzeugs 116 gemessen, unter Verwendung eines Gyroskops und eines Beschleunigungsmessgeräts. Eine korrigierte Position und Richtung, die hinsichtlich des Rollens und Gierens des Landfahrzeugs 116 kompensiert ist, wenn das Landfahrzeug unebenes Gelände überfährt, kann dann im Schritt 208 für das Landfahrzeug 116 berechnet werden, unter Verwendung der (auf dem globalen Positionsbestimmungssystem basierenden) Position und Richtung aus der erzeugten Navigationsinformation und der gemessenen Gierrate und seitlichen Beschleunigung des Landfahrzeugs. In Ausführungsformen der Erfindung kann die korrigierte Richtung anhand der Gl. 1 berechnet werden, während die korrigierte Position durch die Berechnung einer Versatzentfernung für das Landfahrzeug 116 unter Verwendung der Gl. 2 bestimmt werden kann, wobei die Versatzentfernung in Längen- und Breitenkomponenten aufgespalten und der mit dem globalen Positionsbestimmungssystem bestimmten Position hinzuaddiert wird. Die Position und die Richtung werden dann aus der im Schritt 204 erzeugten Navigationsinformation entfernt und im Schritt 210 durch die korrigierte Position und Richtung ersetzt, die im Schritt 208 berechnet wurden, um eine korrigierte Navigationsinformation für das Landfahrzeug 116 bereitzustellen. Die korrigierte Navigationsinformation kann dann zur Navigation und/oder Lenkung des Landfahrzeugs 116 im Schritt 212 verwendet werden.

Wie in der Figur 9 dargestellt, kann die vom Beschleunigungsmessgerät 130 im Schritt 206 gemessene seitliche Beschleunigung weiter verwendet werden, um den Rollwinkel des Landfahrzeugs 116 zu bestimmen, aus dem im Schritt 214 die Neigung (S) des vom Landfahrzeug 116 überfahrenen Geländes bestimmt werden kann. Die Neigung (S) kann dann vom Navigationskontrollsystem 104 verwendet werden, um im Schritt 216 die effektive Spurbreite oder den Spurabstand eines vom Landfahrzeug 116 bewegten Arbeitsgeräts 120 zu bestimmen. Die im Schritt 216 bestimmte effektive Spurbreite kann dann verwendet werden, um im Schritt 212 die Navigation oder das Lenken des Landfahrzeugs 116 zu unterstützen, falls ein selbsttätiges paralleles oder automatisches Lenken des Landfahrzeugs 116 ermöglicht wird. Auf diese Weise können neigungskompensierte Spurbreiten für mehrfache Überfahrten des Geländes für das Arbeitsgerät 120 in Echtzeit bestimmt und angepasst werden, wenn die Neigung des vom Landfahrzeug überfahrenen Geländes ansteigt oder absinkt.

Bei Ausführungsbeispielen können die offenbarten Verfahren als Mengen von Anweisungen implementiert werden, die Software oder Firmware umfasst, die durch das Verarbeitungssystem 132 des Bezugssystemkompensationssystems 122, den Positionsbestimmungssystem-Empfänger 102 oder Komponenten des Navigationskontrollsystems 104 lesbar sind. Außerdem ist anzumerken, dass die spezifische Reihenfolge oder Hierarchie der Schritte in den offenbarten Verfahren nur Beispiele von möglichen Ansätzen sind. Basierend auf Entwurfspräferenzen kann die spezifischen Reihenfolge oder Hierarchie der Schritte in dem Verfahren anders angeordnet werden. Anzumerken ist weiterhin, dass in der beschriebenen Ausführungsform die Geschwindigkeitsinformation als Skalar ausgegeben wird. Anstelle dessen könnte sie als zwei- oder dreidimensionaler Vektor ausgegeben und vom Bezugssystemkompensationssystem korrigiert werden, so dass sich eine separate Richtungsinformation erübrigt. Die Positionsinformation kann ebenfalls dreidimensional ausgegeben werden, d. h. eine Z-Komponente umfassen.

## Patentansprüche

1. Navigationssystem (100) eines Landfahrzeugs (116) mit:

   einem Positionsbestimmungssystem-Empfänger (102), der betreibbar ist, auf einem globalen Positionsbestimmungssystem basierende Positions- und Richtungsinformationen zu erzeugen und einem Bezugssystemkompensationssystem (122) zuzuführen,
   einem korrigierte Positions- und Richtungsinformationen bereitstellenden Bezugssystemkompensationssystem (122), das mit dem Positionsbestimmungssystem-Empfänger (102) und mit einem zur Messung einer seitlichen Beschleunigung des Landfahrzeugs (116) eingerichteten Beschleunigungsmessgerät (130) zur Messung des Rollwinkels des Landfahrzeugs (116) und mit einem Gyroskop (128) zur Messung einer Gierrate und/oder eines Gierwinkels des Landfahrzeugs (116) verbunden und betreibbar ist, die Positions- und Richtungsinformationen des Positionsbestimmungssystem-Empfängers anhand der Signale des Beschleunigungsmessgeräts (130) und des Gyroskops (128) bezüglich des Rollwinkels des Landfahrzeugs (116) und des Gierens des Landfahrzeugs (116) um einen Schwenkpunkt unter Berücksichtigung einer seitlichen Versatzentfernung ($D_{OT}$) zwischen der mit dem globalen Positionsbestimmungssystem bestimmten Position ($P_{GPS}$) und der aktuellen Position eines gewünschten Referenz- oder Kontrollpunkts ($P_c$) für das Landfahrzeug (116) zu kompensieren,
   und einem Navigationskontrollsystem (104), das die durch das Bezugssystemkompensationssystem (122) korrigierten Positions- und Richtungsinformationen empfängt und zum Navigieren und/oder selbsttätigen Lenken des Landfahrzeugs (116) verwendbar ist,
   wobei das Bezugssystemkompensationssystem (122) betreibbar ist, die seitliche Versatzentfernung ($D_{OT}$) anhand einer gemessenen seitlichen Beschleunigung und einer durch zentrifugale Beschleunigung bedingten Entfernung zu berechnen, wobei die durch zentrifugale Beschleunigung bedingte Entfernung anhand von Änderungen in der Position des Landfahrzeugs (116) in Bezug auf die Richtung des Landfahrzeugs (116) bestimmt wird.

2. Navigationssystem (100) nach Anspruch 1, wobei das Bezugssystemkompensationssystem (122) betreibbar ist, die Richtungsinformation des Positionsbestimmungssystem-Empfängers (102) zur Begrenzung der Drift des Gyroskops (128) zu verwenden.

3. Navigationssystem (100) nach Anspruch 2, wobei das Bezugssystemkompensationssystem (122) betreibbar ist, eine kompensierte Richtungsinformation anhand folgender Gleichung zu bestimmen:

$$C_C = [G_R/F_{MEAS}] + [(C_{GPS}-C_G)\cdot K_C/CFR] + Pf,$$

wobei $C_c$ die korrigierte Richtung ist, $G_R$ die gemessene Gierrate, $F_{MEAS}$ die Messfrequenz der Gierrate, $C_{GPS}$ die anhand der Navigationsinformation, die vom Positionsbestimmungssystem-Empfänger (102) erzeugt wurde, bestimmte Richtung, $C_G$ die anhand der Messung der Gierrate ermittelte Richtung, CFR eine Richtungsfilterauflösungsvariable, $K_c$ ein variabler Filterwert mit CFR > $K_c$ > ein positiver Minimalwert, und Pf der Wert, der die korrigierte Richtung von einem Schwenkpunkt des Landfahrzeugs (116) auf einen Punkt projiziert, an dem eine Antenne (114) des Positionsbestimmungssystem-Empfängers (102) an dem Landfahrzeug (116) angebracht ist.

**4.** Navigationssystem (122) nach einem der Ansprüche 1 bis 3, wobei das Bezugssystemkompensationssystem (122) betreibbar ist, die Neigung des befahrenen Geländes anhand der gemessenen seitlichen Beschleunigung des Landfahrzeugs (116) zu berechnen und der kompensierten Positions- und Richtungsinformation hinzuzufügen.

**5.** Navigationssystem (122) nach Anspruch 4, wobei das Bezugssystemkompensationssystem (122) betreibbar ist, die Neigung zur Bestimmung der effektiven Spurbreite des Landfahrzeugs (116) und/oder eines von ihm bewegten Arbeitsgeräts (120) zu verwenden.

**6.** Navigationssystem (122) nach einem der Ansprüche 1 bis 5, wobei es betreibbar ist, das Landfahrzeug (116) entlang einer Spur zu leiten, die im Wesentlichen parallel zu einer zuvor befahrenen Spur verläuft.

**7.** Navigationssystem (122) nach einem der Ansprüche 1 bis 6, wobei das Bezugssystemkompensationssystem (122) betreibbar ist, die Positions- und Richtungsinformationen aus den Positions- und Richtungsinformationen vom Positionsbestimmungssystem-Empfänger (102) zu entfernen und durch die kompensierten Positions- und Richtungsinformationen zu ersetzen und dem Navigationskontrollsystem (104) zuzuführen.

**8.** Verfahren zum Navigieren und/oder selbsttätigen Lenken eines Landfahrzeugs (116) mit folgenden Schritten:

Empfang eines Positionsbestimmungssignals von einem globalen Positionsbestimmungssystem,
Erzeugen daraus abgeleiteter Positions- und Richtungsinformationen,
Bereitstellen korrigierter Positions- und Richtungsinformationen durch Messung einer seitlichen Beschleunigung des Landfahrzeugs (116) mit einem Beschleunigungsmessgerät (130) zur Messung des Rollwinkels des Landfahrzeugs (116) und Messung einer Gierrate und/oder eines Gierwinkels des Landfahrzeugs (116) mit einem Gyroskop (128) und Kompensieren der Positions- und Richtungsinformationen des Positionsbestimmungssystem-Empfängers anhand der Signale des Beschleunigungsmessgeräts (130) und des Gyroskops (128) bezüglich des Rollwinkels des Landfahrzeugs (116) und des Gierens des Landfahrzeugs (116) um einen Schwenkpunkt unter Berücksichtigung einer seitlichen Versatzentfernung ($D_{OT}$) zwischen der mit dem globalen Positionsbestimmungssystem bestimmten Position ($P_{GPS}$) und der aktuellen Position eines gewünschten Referenz- oder Kontrollpunkts ($P_c$) für das Landfahrzeug (116),
und Verwenden der durch das Bezugssystemkompensationssystem (122) korrigierten Positions- und Richtungsinformationen zum Navigieren und/oder selbsttätigen Lenken des Landfahrzeugs (116),
wobei die seitliche Versatzentfernung ($D_{OT}$) anhand einer gemessenen seitlichen Beschleunigung und einer durch zentrifugale Beschleunigung bedingten Entfernung berechnet wird, wobei die durch zentrifugale Beschleunigung bedingte Entfernung anhand von Änderungen in der Position des Landfahrzeugs (116) in Bezug auf die Richtung des Landfahrzeugs (116) bestimmt wird.

## Claims

**1.** Navigation system (100) of a land vehicle (116), comprising:

a positioning system receiver (102) which can be operated to generate items of position information and direction information based on a global positioning system, and to feed them to a reference system compensation system (122),
a reference system compensation system (122) which provides corrected items of position information and direction information and is connected to the positioning system receiver (102) and to an accelerometer (130), set up to measure a lateral acceleration of the land vehicle (116), for measuring the roll angle of the land vehicle (116), and to a gyroscope (128) for measuring a yaw rate and/or a yaw angle of the land vehicle (116), and can be operated to compensate the items of position information and direction information of the positioning system receiver with the aid of the signals of the accelerometer (130) and of the gyroscope (128) with reference to the roll angle of the land vehicle (116) and of the yaw of the land vehicle (116) about a pivot point while taking account of a lateral offset distance ($D_{OT}$) between the position ($P_{GPS}$) determined with the global positioning system, and the current position of a desired reference or control point ($P_C$) for the land vehicle (116) ,

and a navigation control system (104) which receives the items of position information and direction information corrected by the reference system compensation system (122), and can be used to navigate and/or automatically steer the land vehicle (116),

it being possible to operate the reference system compensation system (122) to calculate the lateral offset distance ($D_{OT}$) with the aid of a measured lateral acceleration and a distance due to centrifugal acceleration, the distance due to centrifugal acceleration being determined with the aid of changes in the position of the land vehicle (116) with reference to the direction of the land vehicle (116).

2. Navigation system (100) according to Claim 1, in which the reference system compensation system (122) can be operated to use the direction information of the positioning system receiver (102) to limit the drift of the gyroscope (128).

3. Navigation system (100) according to Claim 2, in which the reference system compensation system (122) can be operated to determine a compensated item of direction information with the aid of the following equation:

$$C_C = [G_R/F_{MEAS}] + [(C_{GPS}-C_G) \cdot K_C/CFR] + Pf,$$

$C_C$ being the corrected direction, $G_R$ the measured yaw rate, $F_{MEAS}$ the measurement frequency of the yaw rate, $C_{GPS}$ the direction determined with the aid of the navigation information which has been generated by the positioning system receiver (102), $C_G$ the direction determined with the aid of the measurement of the yaw rate, CFR a directional filter resolution variable, $K_C$ a variable filter value with CFR > $K_C$ > a positive minimum value, and Pf the value which the corrected direction of a pivot point of the land vehicle (116) projects onto a point at which an antenna (114) of the positioning system receiver (102) is fitted on the land vehicle (116) .

4. Navigation system (100) according to one of Claims 1 to 3, in which the reference system compensation system (122) can be operated to calculate the slope of the terrain being travelled with the aid of the measured lateral acceleration of the land vehicle (116), and to add in the compensated position information and direction information.

5. Navigation system (100) according to Claim 4, in which the reference system compensation system (122) can be operated to use the slope to determine the effective track width of the land vehicle (116) and/or an implement (120) moved by it.

6. Navigation system (100) according to one of Claims 1 to 5, in which it can be operated to guide the land vehicle (116) along a track which runs substantially parallel to a previously travelled track.

7. Navigation system (100) according to one of Claims 1 to 6, in which the reference system compensation system (122) can be operated to remove the items of position information and direction information from the items of position information and direction information of the positioning system receiver (102), and replace them by the compensated items of position information and direction information and feed them to the navigation control system (104).

8. Method for navigating and/or automatically steering a land vehicle (116), having the following steps:

receiving a positioning signal from a global positioning system,
generating items of position information and direction information derived therefrom,
providing corrected items of position information and direction information by measuring a lateral acceleration of the land vehicle (116) with an accelerometer (130) for measuring the roll angle of the land vehicle (116) and measuring a yaw rate and/or a yaw angle of the land vehicle (116) with a gyroscope (128), and compensating the items of position information and direction information of the positioning system receiver with the aid of the signals of the accelerometer (130) and of the gyroscope (128) with reference to the roll angle of the land vehicle (116) and of the yaw of the land vehicle (116) about a pivot point while taking account of a lateral offset distance ($D_{OT}$) between the position ($P_{GPS}$) determined with the global positioning system, and the current position of a desired reference or control point ($P_C$) for the land vehicle (116),
and using the items of position information and direction information corrected by the reference system compensation system (122) to navigate and/or automatically steer the land vehicle (116),
the lateral offset distance ($D_{OT}$) being calculated with the aid of a measured lateral acceleration and a distance due to centrifugal acceleration, the distance due to centrifugal acceleration being determined with the aid of changes in the position of the land vehicle (116) with reference to the direction of the land vehicle (116).

**Revendications**

1. Système de navigation (100) d'un véhicule terrestre (116) comprenant :

   un récepteur de système de détermination de la position (102) qui peut être utilisé pour générer des informations de position et de direction se basant sur un système global de détermination de la position et pour les acheminer à un système de compensation de système de référence (122),
   un système de compensation de système de référence (122) délivrant des informations de position et de direction corrigées, lequel est relié avec le récepteur de système de détermination de la position (102) et avec un appareil de mesure de l'accélération (130) destiné à mesurer l'angle de roulis du véhicule terrestre (116) et configuré pour mesurer une accélération latérale du véhicule terrestre (116) et avec un gyroscope (128) destiné à mesurer un taux de lacet et/ou un angle de lacet du véhicule terrestre (116) et peut être utilisé pour compenser les informations de position et de direction du récepteur de système de détermination de la position au moyen des signaux de l'appareil de mesure de l'accélération (130) et du gyroscope (128) par rapport à l'angle de roulis du véhicule terrestre (116) et du lacet du véhicule terrestre (116) autour d'un centre de gravité en tenant compte d'une distance de désalignement latérale ($D_{OT}$) entre la position ($P_{GPS}$) déterminée avec le système global de détermination de la position et la position actuelle d'un point de référence ou de contrôle ($P_C$) souhaité pour le véhicule terrestre (116),
   et un système de contrôle de navigation (104) qui reçoit les informations de position et de direction corrigées par le système de compensation de système de référence (122) et peut être utilisé pour la navigation et/ou le guidage automatique du véhicule terrestre (116),
   le système de compensation de système de référence (122) pouvant être utilisé pour calculer la distance de désalignement latérale ($D_{OT}$) au moyen d'une accélération latérale mesurée et d'une distance liée à l'accélération centrifuge, la distance liée à l'accélération centrifuge étant déterminée au moyen de modifications de la position du véhicule terrestre (116) par rapport à la direction du véhicule terrestre (116).

2. Système de navigation (100) selon la revendication 1, le système de compensation de système de référence (122) pouvant être utilisé pour employer l'information de direction du récepteur de système de détermination de la position (102) pour limiter la dérive du gyroscope (128).

3. Système de navigation (100) selon la revendication 2, le système de compensation de système de référence (122) pouvant être utilisé pour déterminer une information de direction compensée au moyen de l'équation suivante :

$$C_C = [G_R/F_{MEAS}] + [(C_{GPS} - C_G).K_C/CFR] + Pf,$$

où $C_C$ désigne la direction corrigée, $G_R$ le taux de lacet mesuré, $F_{MEAS}$ la fréquence de mesure du taux de lacet, $C_{GPS}$ la direction déterminée au moyen de l'information de navigation qui a été générée par le récepteur de système de détermination de la position (102), $C_G$ la direction déterminée au moyen de la mesure du taux de lacet, CFR une variable de résolution du filtre de direction, $K_C$ une valeur de filtrage variable avec CFR > $K_C$ > une valeur minimale positive et Pf la valeur que la direction corrigée projette depuis un centre de gravité du véhicule terrestre (116) sur un point auquel une antenne (114) du récepteur de système de détermination de la position (102) est installée sur le véhicule terrestre (116).

4. Système de navigation (100) selon l'une des revendications 1 à 3, le système de compensation de système de référence (122) pouvant être utilisé pour calculer l'inclinaison du terrain parcouru au moyen de l'accélération latérale mesurée du véhicule terrestre (116) et l'ajouter aux informations de position et de direction compensées.

5. Système de navigation (100) selon la revendication 4, le système de compensation de système de référence (122) pouvant être utilisé pour employer l'inclinaison pour déterminer la largeur de voie effective du véhicule terrestre (116) et/ou de l'engin de travail (120) qu'il déplace.

6. Système de navigation (100) selon l'une des revendications 1 à 5, celui-ci pouvant être utilisé pour guider le véhicule terrestre (116) le long d'une voie qui s'étend pour l'essentiel parallèlement à une voie parcourue précédemment.

**7.** Système de navigation (100) selon l'une des revendications 1 à 6, le système de compensation de système de référence (122) pouvant être utilisé pour déduire les informations de position et de direction des informations de position et de direction du récepteur de système de détermination de la position (102) et les remplacer par les informations de position et de direction compensées et les acheminer au système de contrôle de navigation (104).

**8.** Procédé de navigation et/ou de guidage automatique d'un véhicule terrestre (116) comprenant les étapes suivantes :

réception d'un signal de détermination de la position de la part d'un système global de détermination de la position,

génération d'informations de position et de direction dérivées de celui-ci,

fourniture d'informations de position et de direction corrigées en mesurant une accélération latérale du véhicule terrestre (116) avec un appareil de mesure de l'accélération (130) destiné à mesurer l'angle de roulis du véhicule terrestre (116) et en mesurant un taux de lacet et/ou un angle de lacet du véhicule terrestre (116) avec un gyroscope (128) et compensation des informations de position et de direction du récepteur de système de détermination de la position au moyen des signaux de l'appareil de mesure de l'accélération (130) et du gyroscope (128) par rapport à l'angle de roulis du véhicule terrestre (116) et du lacet du véhicule terrestre (116) autour d'un centre de gravité en tenant compte d'une distance de désalignement latérale ($D_{OT}$) entre la position ($P_{GPS}$) déterminée avec le système global de détermination de la position et la position actuelle d'un point de référence ou de contrôle ($P_C$) souhaité pour le véhicule terrestre (116) ,

et utilisation des informations de position et de direction corrigées par le système de compensation de système de référence (122) pour la navigation et/ou le guidage automatique du véhicule terrestre (116),

la distance de désalignement latéral ($D_{OT}$) étant calculée au moyen d'une accélération latérale mesurée et d'une distance liée à l'accélération centrifuge, la distance liée à l'accélération centrifuge étant déterminée au moyen des modifications de la position du véhicule terrestre (116) par rapport à la direction du véhicule terrestre (116).

Fig. 1

100

108 Lenksteuereinrichtung
110 Lenkwinkelsensor
112 Lenkradübersteuerungs-sensor

104 Navigationskontroll-system

106 Navigations-information
- Richtung
- Position
- Geschwindigkeit
- Zeit

102 GPS Empfänger-zusammenbau

Fig. 2

100

108 Lenksteuereinrichtung
110 Lenkwinkelsensor
112 Lenkradübersteuerungs-sensor

104 Navigations-kontrollsystem

126 Korrigierte Navigations-information
- korrigierte Richtung
- korrigierte Position
- Geschwindigkeit
- Zeit

122 Bezugssystem-Kompensations-System

106

124 Navigations-information
- Richtung
- Position
- Geschwindigkeit
- Zeit

102 GPS Empfänger-zusammenbau

14

$D_L$    $114$    $102$

$D_L$    $P_A$

$D_L (D_{LX}, D_{LY}, D_{LZ})$

$120$

$116$

$102$    $118$    $P_C$    *FIG. 3*

$114$    $102$    $116$

$P_C$

$P_{GPS}$    $D_{OT}$    *FIG. 4*

EP 1 475 609 B1

FIG. 5

Fig. 6

122

Verarbeitungssystem

Flash
Speicher

136

140

132

EEPROM

138

RAM

134

PROZESSOR

Navigationsinformation
- Richtung
- Position
- Geschwindigkeit
- Zeit

Beschleunigungsmessgerät

Gier Gyroskop

130

128

Korrigierte
Navigationsinformation
- korrigierte Richtung
- korrigierte Position
- Geschwindigkeit
- Zeit

EP 1 475 609 B1

## Fig. 7

114
102
116
120

## Fig. 8

Breite des Arbeitsgeräts

S

Effektiver Spurabstand

200

Empfange
GPS-Signal          202

Erzeuge
Navigations-        204
Information

Messe Gierrate
und seitliche       →    Berechne
Beschleunigung           korrigierte      208
                         Richtung
                         und Position
206

Bestimme            214
Neigung

Fig. 9

Ersetze Richtung
und Position (füge   210
Neigung hinzu)

navigiere/lenke              bestimme effektiven
Landfahrzeug         ◄------  Spurabstand

212                          216

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0845198 A
- US 6445983 B
- US 5987371 A
- US 6345231 B
- US 6236916 B
- US 5928309 A1
- US 5416712 A